# EUROPEAN PATENT APPLICATION

(11) **EP 1 142 931 A1**
(43) Date of publication of application: **10.10.2001**
(21) Application number: 00302908.9
(22) Date of filing: 06.04.2000
(51) Int. Cl.: C08G 77/24, C08G 77/385, C08G 77/44, C08G 77/46, C08G 77/50

(54) **Perfluoroalkyl-functional organopolysiloxane**

(71) Applicant: Dow Corning Toray Silicone Co., Ltd., Tokyo (JP)
(72) Inventor: Kobayashi, Hideki c/o Dow Corning Toray Sil. C.Ltd, Chiba Prefecture (JP); Masatomi, Toru c/o Dow Corning Toray Sil. C.Ltd, Chiba Prefecture (JP)
(74) Representative: Kyle, Diana

(57) **Abstract**

This invention pertains to a perfluoroalkyl-functional organopolysiloxane that is useful as a surfactant or agent for imparting water and oil repellency and that contains in each molecule a special perfluoroalkyl-functional organic group and a polyoxyalkylene group, polydialkylsiloxane chain-containing organic group, silicon-bonded hydrogen, or silicon-bonded moisture-hydrolyzable organic group.

The perfluoroalkyl-functional organopolysiloxane of this invention has the formula 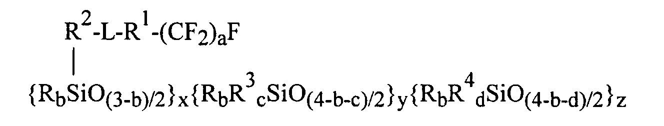 wherein R represents C₁ to C₃₀ monovalent hydrocarbon groups; R¹ represents C₁ to C₁₀ divalent hydrocarbon groups; R² represents C₁ to C₂₀ divalent hydrocarbon groups; L is a group with the formula -CO- or -COO-, R³ is a polyoxyalkylene group or a polydialkylsiloxane chain-containing organic group; R⁴ is the hydrogen atom or a moisture-hydrolyzable group; **a** is an integer with a value of at least 3, **b** is a number from 0 to 2, **c** is a number from 0 to 3, **d** is a number from 0 to 3, **b** + **c** is a number less than 4, **b** + **d** is a number less than 4, **c** + **d** is a number with a value of at least 1, **x** is an integer with a value of at least 2, **y** is an integer with a value of at least 0, and **z** is an integer with a value of at least 0, with the proviso that **y** + **z** is an integer with a value of at least 1.

## Description

This invention relates to a novel perfluoroalkyl-functional organopolysiloxane. The perfluoroalkyl-functional organopolysilxoane contains a perfluoroalkyl-functional organic group plus a polyoxyalkylene group, polydialkylsiloxane chain-containing organic group, silicon-bonded hydrogen, or silicon-bonded moisture-hydrolyzable organic group.

Within the sphere of perfluoroalkyl-functional organopolysiloxanes, poly(3,3,3-trifluoropropylmethylsiloxane), poly(3,3,4,4,5,5,6,6,6-nonafluorohexylmethylsiloxane), 3,3,3-trifluoropropylmethylsiloxane-dimethylsiloxane copolymer, and 3,3,4,4,5,5,6,6,6-nonafluorohexylmethylsiloxane-dimethylsiloxane copolymer are already known and in some cases have reached the level of practical application. The perfluoroalkyl-functional organopolysiloxane with the formula 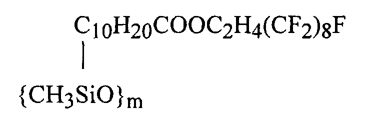 is also known (J. Polym. Sci., Part A: Polym. Chem., Vol. 32, 1673 (1994)). Unknown to date, however, is an organopolysiloxane that contains in each molecule the perfluoroalkyl-functional organic group as in the aforementioned J. Polym. Sci. citation plus a polyoxyalkylene group, polydialkylsiloxane chain-containing organic group, silicon-bonded hydrogen, or silicon-bonded moisture-hydrolyzable-organic group.

An object of this invention is the introduction of a perfluoroalkyl-functional organopolysiloxane that contains in each molecule a perfluoroalkyl-functional organic group and a polyoxyalkylene group, polydialkylsiloxane chain-containing organic group, silicon-bonded hydrogen, or silicon-bonded moisture-hydrolyzable organic group.

This invention relates to perfluoroalkyl-functional organopolysiloxane with the formula 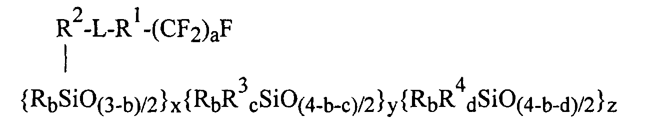 wherein R represents C₁ to C₃₀ monovalent hydrocarbon groups; R¹ represents C₁ to C₁₀ divalent hydrocarbon groups; R² represents C₁ to C₂₀ divalent hydrocarbon groups; L is a group with the formula -CO- or -COO-; R³ is a polyoxyalkylene group or a polydialkylsiloxane chain-containing organic group; R⁴ is the hydrogen atom or a moisture-hydrolyzable group; **a** is an integer with a value of at least 3, **b** is a number from 0 to 2, **c** is a number from 0 to 3, **d** is a number from 0 to 3, **b** + **c** is a number less than 4, **b** + **d** is a number less than 4, **c** + **d** is a number with a value of at least 1, **x** is an integer with a value of at least 2, **y** is an integer with a value of at least 0, and **z** is an integer with a value of at least 0, with the proviso that **y** + **z** is an integer with a value of at least 1.

The perfluoroalkyl-functional organopolysiloxane is defined by the following formula.

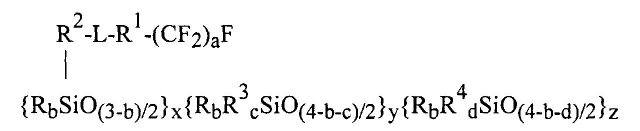

R represents C₁ to C₃₀ monovalent hydrocarbon groups and can be exemplified by alkyl groups such as methyl, ethyl, hexyl, and decyl; aryl groups such as phenyl; and arylalkyl groups such as phenethyl. Methyl is preferred for R.

R¹ represents C₁ to C₁₀ divalent hydrocarbon groups and can be exemplified by methylene, dimethylene, trimethylene, octamethylene, and decamethylene, preferably the dimethylene group.

R² represents C₁ to C₂₀ divalent hydrocarbon groups and can be exemplified by methylene, dimethylene, trimethylene, octamethylene, decamethylene, and octadecamethylene. R² preferably contains at least 3 carbon atoms, and decamethylene is particularly preferred for R².

L is the -C(=O)- or -C(=O)O- group.

The perfluoroalkyl-functional organic group can be specifically exemplified by the following groups:

-C₁₀H₂₀COOC₂H₄C₄F₉

-C₁₀H₂₀COOC₂H₄C₆F₁₃

-C₁₀H₂₀COOC₂H₄C₈F₁₇

-C₄H₈COOC₂H₄C₈F₁₇

-C₃H₆COOC₂H₄C₈F₁₇

-C₁₀H₂₀COC₂H₄C₈F₁₇

-C₃H₆COC₃H₆C₈F₁₇

-C₂H₄COC₂H₄C₈F₁₇

R³ is a polyoxyalkylene group or a polydialkylsiloxane chain-containing organic group. The polyoxyalkylene group can be exemplified by the group with the general formula -(R⁵)ₙ-O-(R⁶O)ₚ-R⁷ in which R⁵ is a divalent hydrocarbon group; R⁶ is C₁ to C₄ alkylene; R⁷ is the hydrogen atom, a monovalent hydrocarbon group, or an acyl group; **n** is 0 or 1; and **p** is an integer from 1 to 300 and preferably is an integer with a value of at least 5. This polyoxyalkylene group can be specifically exemplified by the following:

-C₃H₆O(C₂H₄O)₁₂CH₃,

-C₃H₆O(C₃H₆O)₂₀CH₃,

-C₃H₆O(C₂H₄O)₆(C₃H₆O)₂₀CH₃,

-C₃H₆O(C₂H₄O)₂₀H,

-C₃H₆O(C₃H₆O)₄₀H,

-C₃H₆O(C₂H₄O)₂₀(C₃H₆O)₂₀H,

-C₃H₆O(C₃H₆O)₄₀COCH₃,

and

-C₃H₆O(C₂H₄O)₂₀(C₃H₆O)₂₀COCH₃.

The polydialkylsiloxane chain-containing organic group encompassed by R³ is a group with the general formula 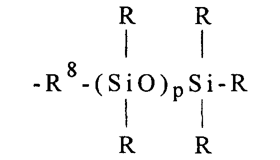 bonded in side-chain position in the organopolysiloxane. R⁸ is alkylene or alkyleneoxyalkylene, while R and **p** are defined as above. This polydialkylsiloxane chain-containing organic group can be specifically exemplified by groups with the following formulas in which Me is an abbreviation for the methyl group.

-C₂H₄{Me₂SiO}₄₀Me₂SiC₄H₉

-C₂H₄{Me₂SiO}₅₀SiMe₃

-C₃H₆{Me₂SiO}₄₀Me₂SiC₄H₉

-C₂H₄{Me₂SiO}₆₀SiMe₃

R⁴ in the perfluoroalkyl-functional organopolysiloxane is the hydrogen atom or a moisture-hydrolyzable group. The moisture-hydrolyzable group can be exemplified by alkoxy groups, diorgano ketoxime groups, acyloxy groups, monoorganoamino groups, diorganoamino groups, N-organoacylamino groups, N,N-diorganohydroxyamino groups, and alkenyloxy groups. The moisture-hydrolyzable group can be specifically exemplified by dimethyl ketoxime, methyl ethyl ketoxime, methoxy, ethoxy, acetoxy, N-butylamino, methylacetamide, N,N-diethylhydroxyamino, and propenoxy.

The subscripts in the perfluoroalkyl-functional organopolysiloxane are defined as follows: **a** is an integer with a value of at least 3 and preferably with a value from 4 to 8; **b** is a number from 0 to 2; **c** is a number from 0 to 3; **d** is a number from 0 to 3; **b** + **c** is a number less than 4; **b** + **d** is a number less than 4; **c** + **d** is a number with a value of at least 1; **b, c,** and **d** within the individual molecule may be the same or may differ; **x** is an integer with a value of at least 2; **y** is an integer with a value of at least 0; **z** is an integer with a value of at least 0; and **y** + **z** is an integer with a value of at least 1. The subscript **d** must be at least 1 when **y** in the organopolysiloxane is 0, while **c** must be at least 1 when **z** is 0.

The molecular weight of the perfluoroalkyl-functional organopolysiloxane is preferably from 1,000 to 1,000,000 and more preferably from 2,000 to 100,000. This organopolysiloxane preferably has a fluorine content from 1 to 70 weight% and more preferably from 5 to 50 weight%. A full development of the surfactancy and water and oil repellency will not occur at a fluorine content less than 1 weight%, while these activities undergo no additional improvements at fluorine contents greater than 70 weight%.

The perfluoroalkyl-functional organopolysiloxane may be exemplified by organopolysiloxanes having the formula: 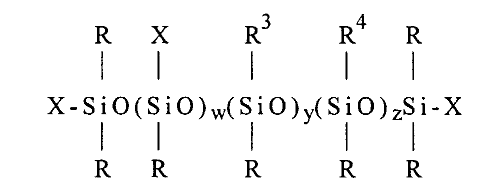 R, R³, R⁴, **y**, and **z** are defined as above; X is a C₁ to C₃₀ monovalent hydrocarbon group or a group with the formula -R²-L-R¹-(CF₂)ₐF wherein at least 2 X groups must be a group with the formula -R²-L-R¹-(CF₂)ₐF; and **w** is 0 or an integer with a value of at least 1.

The perfluoroalkyl-functional organopolysiloxane can be specifically exemplified by the following compounds in which Me = methyl:

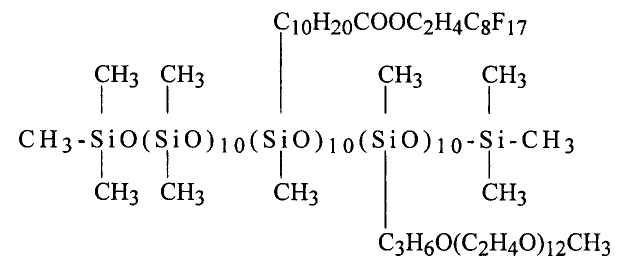

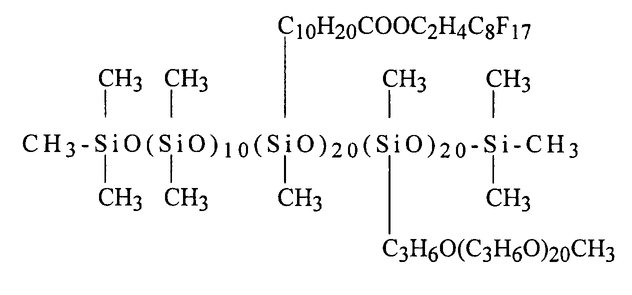

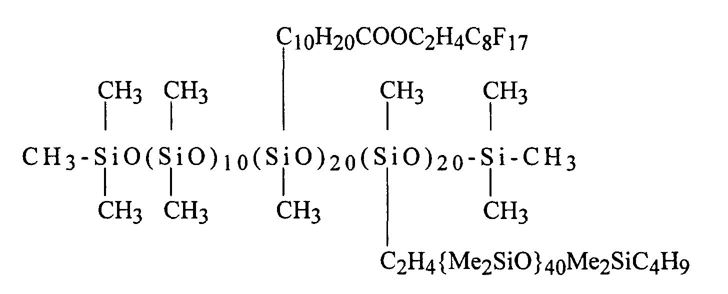

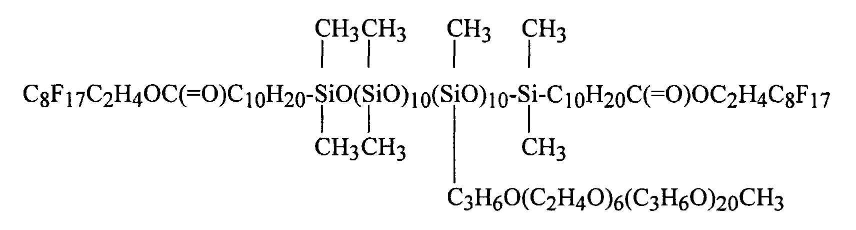

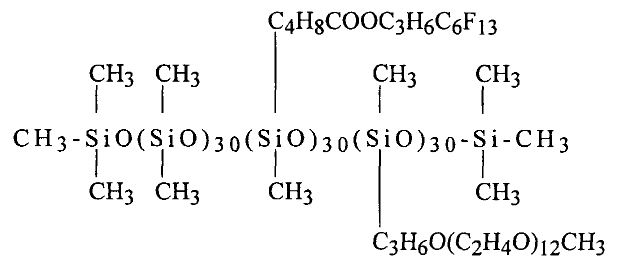

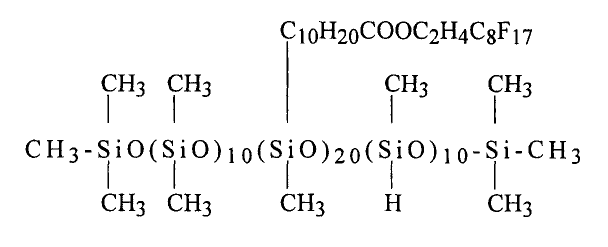

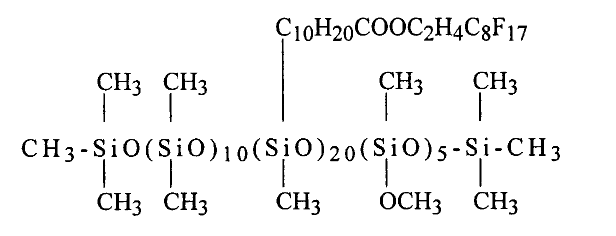

The perfluoroalkyl-functional organopolysiloxane can be synthesized, for example, by the addition reaction of SiH-functional organopolysiloxane, for example, (F1) methylhydrogenpolysiloxane with the formula 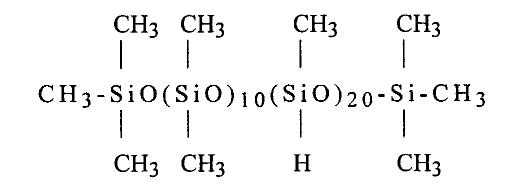 with an alkenyl-functional polyoxyalkylene compound CH₂=CHCH₂O(C₂H₄O)₁₀H or a vinyl-functional dimethylpolysiloxane CH₂=CH{(CH₃)₂SiO}₄₀(CH₃)₂SiR⁹ (R⁹ = monovalent hydrocarbon groups) and with (F2) perfluoroalkyl-functional olefin with the formula F(CF₂)ₐ-R¹-L-R¹⁰ (R¹, L, and **a** are defined as above and R¹⁰ is a C₁ to C₂₀ monovalent hydrocarbon group that contains 1 carbon-carbon double bond). This reaction is carried out by heating in the presence of an addition-reaction catalyst such as chloroplatinic acid. Organic solvent may be used in this reaction as necessary, and other alkenyl-functional hydrocarbon, such as an α-olefin, can also be added to the reaction as necessary.

The perfluoroalkyl-functional organopolysiloxane can also be synthesized by first addition-reacting as described above a portion of the silicon-bonded hydrogen atoms in the organopolysiloxane (F1) with the perfluoroalkyl-functional olefin (F2) in the presence of an addition-reaction catalyst such as chloroplatinic acid and then converting the remaining silicon-bonded hydrogen atoms to moisture-hydrolyzable groups by known methods.

The perfluorbalkyl-functional organopolysiloxane is a compound that contains in each molecule at least 2 perfluoroalkyl-functional organic groups and at least 1 polyoxyalkylene group, polydialkylsiloxane chain-containing organic group, silicon-bonded hydrogen atom, or silicon-bonded moisture-hydrolyzable group. The organopolysiloxane containing the polyoxyalkylene group or polydialkylsiloxane chain-containing organic group in side chain position is useful as a surfactant, while the organopolysiloxane containing silicon-bonded hydrogen or silicon-bonded moisture-hydrolyzable groups in side chain position will react with various surfaces and hence is useful as an agent for imparting water and oil repellency.

### EXAMPLES

So that those skilled in the art can understand and appreciate the invention taught herein, the following examples are presented, it being understood that these examples should not be used to limit the scope of this invention found in the claims. In the following examples "parts" denotes "weight parts" and Me represents the methyl group. The values reported for the viscosity were measured at 25°C, and the surface tension of the silicone oil was measured at 25°C using a PD-Z surface tension meter from Kyowa Kaimen Kagaku Kabushiki Kaisha.

### EXAMPLE 1

2 g polyorganosiloxane (P1) with the formula 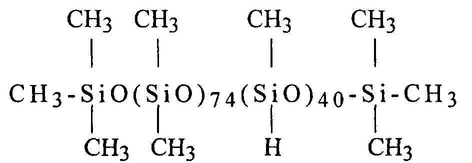 0.1 g platinum/tetramethyldivinyldisiloxane complex solution (amount providing a 20 ppm content of platinum metal proper), 11.5 g vinyl-functional polydimethylsiloxane with the formula CH₂=CH(Me₂SiO)₅₁SiMe₃, 10 g perfluoroalkyl-functional olefin with the formula CH₂=CHC₈H₁₆COOC₂H₄C₈F₁₇, and 66 g toluene were placed in a flask, gradually heated to 60°C, and reacted at 60°C for 4 hours. 22 g reaction product was then recovered by dropping the pressure to 50 torr at 100°C and removing the solvent and low-boiling components. Analysis of this reaction product by ²⁹Si-NMR, ¹³C-NMR, and FT-IR confirmed it to be perfluoroalkyl-functional organopolysiloxane with the following formula.

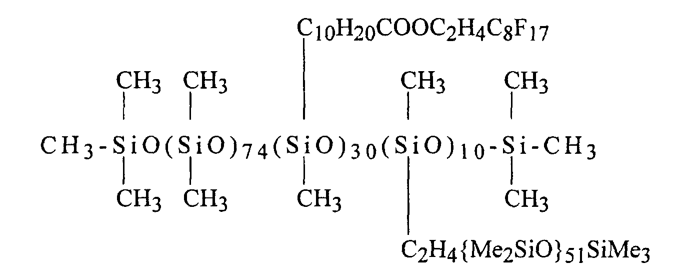

### EXAMPLE 2

17 g of a reaction product was obtained operating as in Example 1, but using 7.6 g of the allyl-functional polyoxyalkylene compound CH₂=CHCH₂O(C₂H₄O)₂₄(C₃H₆O)₂₄CH₃ in place of the 11.5 g vinyl-functional polydimethylsiloxane. Analysis of this reaction product by ²⁹Si-NMR, ¹³C-NMR, and FT-IR confirmed it to be perfluoroalkyl-functional organopolysiloxane with the following formula.

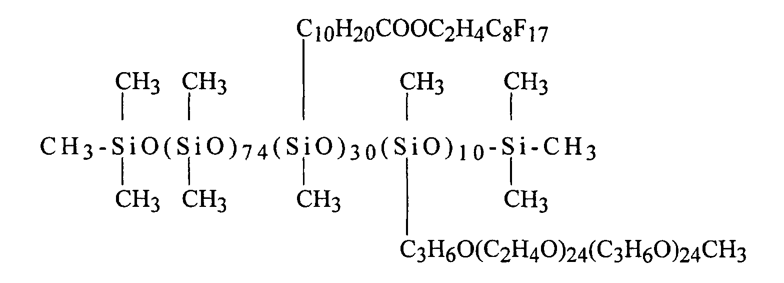

### EXAMPLE 3

10 g reaction product was prepared operating as in Example 1, but omitting the vinyl-functional polydimethylsiloxane. Analysis of this reaction product by ²⁹Si-NMR, ¹³C-NMR, and FT-IR confirmed it to be perfluoroalkyl-functional organopolysiloxane with the following formula.

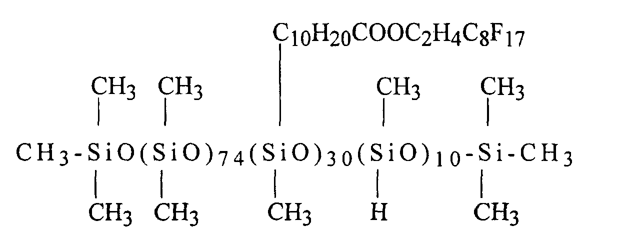

### EXAMPLE 4

3 g methanol was added to 3 g of the perfluoroalkyl-functional organopolysiloxane synthesized in Example 3 and the reactants were mixed for 3 hours while heating under reflux. The solvents and low-boiling components were then removed to give 3 g reaction product. Analysis of this reaction product by ²⁹Si-NMR, ¹³C-NMR, and FT-IR confirmed it to be perfluoroalkyl-functional organopolysiloxane with the following formula.

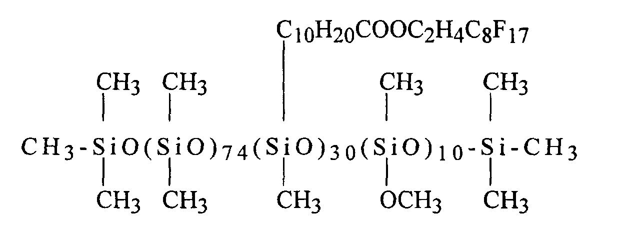

### APPLICATION EXAMPLE 1

A homogeneous and transparent mixed oil was obtained when 100 g polydimethylsiloxane oil (product of Dow Corning Toray Silicone Co., Ltd., surface tension = 20.7 mN/m, viscosity = 300 mm²/s) was mixed with 2 g of the perfluoroalkyl-functional organopolysiloxane synthesized in Example 1. Measurement of the surface tension of this mixed oil gave a value of 19.2 mN/m, which demonstrated the surface-activity of the perfluoroalkyl-functional organopolysiloxane.

In contrast, when 2 g perfluoroalkyl-functional organopolysiloxane with the formula 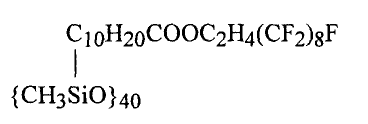 was mixed into 100 g of the polydimethylsiloxane for purposes of comparison, a milky white oil was produced, which demonstrated an inadequate surface-activity.

## Claims

1. A perfluoroalkyl-functional organopolysiloxane with the general formula 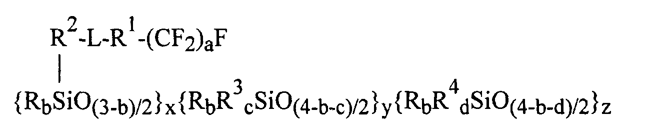 wherein R represents C₁ to C₃₀ monovalent hydrocarbon groups;
R¹ represents C₁ to C₁₀ divalent hydrocarbon groups;
R² represents C₁ to C₂₀ divalent hydrocarbon groups;
L is a group with the formula -C(=O)- or -C(=O)O-;
R³ is a polyoxyalkylene group or a polydialkylsiloxane chain-containing organic group;
R⁴ is the hydrogen atom or a moisture-hydrolyzable group;
**a** is an integer with a value of at least 3, **b** is a number from 0 to 2, **c** is a number from 0 to 3, **d** is a number from 0 to 3, **b** + **c** is a number less than 4, **b** + **d** is a number less than 4, **c** + **d** is a number with a value of at least 1, **x** is an integer with a value of at least 2, **y** is an integer with a value of at least 0, and **z** is an integer with a value of at least 0, with the proviso that **y** + **z** is an integer with a value of at least 1.

2. The perfluoroalkyl-functional organopolysiloxane as claimed in claim 1 wherein R is methyl.

3. The perfluoroalkyl-functional organopolysiloxane as claimed in claim 1 or 2, wherein R¹ is a dimethylene group.

4. The perfluoroalkyl-functional organopolysiloxane as claimed in any of claims 1 to 3, in which R² is a divalent hydrocarbon group having at least 3 carbons.

5. The perfluoroalkyl-functional organopolysiloxane as claimed in any of claims 1 to 4, wherein R³ is a polyoxyalkylene group having the formula
-(R⁵)ₙ-O-(R⁶O)ₚ-R⁷
wherein which R⁵ is a divalent hydrocarbon group; R⁶ is C₁ to C₄ alkylene; R⁷ is the hydrogen atom, a monovalent hydrocarbon group, or an acyl group; **n** is 0 or 1; and **p** is an integer from 1 to 300.

6. The perfluoroalkyl-functional organopolysiloxane as claimed in any of claims 1 to 4, wherein R³ is a polydialkylsiloxane chain-containing organic group with the formula 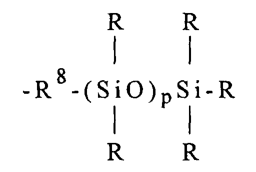 bonded in side-chain position in the organopolysiloxane wherein R⁸ is alkylene or alkyleneoxyalkylene; R represents C₁ to C₃₀ monovalent hydrocarbon groups; and **p** is an integer from 1 to 300.

7. The perfluoroalkyl-functional organopolysiloxane as claimed in any of claims 1 to 6, wherein R⁴ is a hydrogen atom.

8. The perfluoroalkyl-functional organopolysiloxane as claimed in any of claims 1 to 6, wherein R⁴ is a moisture-hydrolyzable group selected from alkoxy groups, diorgano ketoxime groups, acyloxy groups, monoorganoamino groups, diorganoamino groups, N-organoacylamino groups, N,N-diorganohydroxyamino groups, and alkenyloxy groups.

9. The perfluoroalkyl-functional organopolysiloxane as claimed in claim 1 having the formula 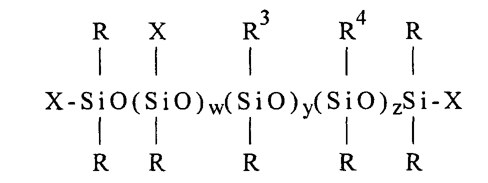 wherein R represents C₁ to C₃₀ monovalent hydrocarbon groups;
R³ is a polyoxyalkylene group or a polydialkylsiloxane chain-containing organic group;
R⁴ is the hydrogen atom or a moisture-hydrolyzable group;
X is a C₁ to C₃₀ monovalent hydrocarbon group or a group with the formula -R²-L-R¹-(CF₂)ₐF wherein at least 2 X groups must be a group with the formula -R²-L-R¹-(CF₂)ₐF;
**y** is an integer with a value of at least 0, **z** is an integer with a value of at least 0, and **w** is 0 or an integer with a value of at least 1.
